# EUROPEAN PATENT APPLICATION

(11) **EP 4 376 153 A1**
(43) Date of publication of application: **29.05.2024**
(21) Application number: 22937962.3
(22) Date of filing: 22.04.2022
(51) Int. Cl.: H01M 10/0587

(54) **BATTERY CELL, BATTERY AND ELECTRICAL DEVICE**

(71) Applicant: Contemporary Amperex Technology Co., Limited, Ningde, Fujian 352100 (CN)
(72) Inventor: JIN, Haizu, Ningde, Fujian 352100 (CN); LIU, Wei, Ningde, Fujian 352100 (CN); XU, Hu, Ningde, Fujian 352100 (CN)
(74) Representative: Frick, Robert
(86) International application number: PCT/CN2022/088579
(87) International publication number: WO 2023/201726

(57) **Abstract**

A battery cell, a battery and an electricity-consuming apparatus are provided by the present application. The battery cell includes a casing, an electrode assembly and at least one binding member. The electrode assembly is arranged in the casing. The electrode assembly includes a main body. The main body includes a first end and a second end arranged opposite to each other in an axial direction of the electrode assembly. At least one binding member is arranged between a peripheral side face of the main body and the casing. The at least one binding member includes a first binding member. The minimum distance between the first binding member and the first end is smaller than the minimum distance between the first binding member and the second end. The battery cell provided by embodiments of the present application can improve the consistency of an internal stress of the electrode assembly of the battery cell, so as to improve the stability and consistency of the charging and discharging performance of the electrode assembly, thereby improving the cycling life of the battery cell.

## Description

### TECHNICAL FIELD

The present application relates to the technical field of batteries, and in particular to a battery cell, a battery and an electricity-consuming apparatus.

### BACKGROUND

A battery is widely used in an electricity-consuming apparatus, such as a mobile phone, a laptop, a battery vehicle, an electric car, an electric plane, an electric ship, an electric toy car, an electric toy ship, an electric toy plane and an electric tool. A battery cell includes a cadmium nickel battery cell, a hydrogen nickel battery cell, a lithium-ion battery cell, a secondary alkaline zinc manganese battery cell and the like.

In the development of the battery cell technology, in addition to improving the usage performance of a battery cell, how to improve the service life of the battery cell is a problem that cannot be ignored. Improvement of the service life of the battery cell has a significant impact on saving energy. Therefore, how to improve the service life of the battery cell is a problem that needs continuous improvement in the battery cell technology.

### SUMMARY

The present application provides a battery cell, a battery and an electricity-consuming apparatus, so that the service life of the battery cell can be improved.

In a first aspect, embodiments of the present application provide a battery cell including a casing, an electrode assembly and at least one binding member. The electrode assembly is arranged in the casing. The electrode assembly includes a main body. The main body includes a first end and a second end arranged opposite to each other in an axial direction of the electrode assembly. At least one binding member is arranged between a peripheral side face of the main body and the casing. The at least one binding member includes a first binding member. The minimum distance between the first binding member and the first end is smaller than the minimum distance between the first binding member and the second end.

In the battery cell provided by the embodiments of the present application, by setting the minimum distance between the first binding member and the first end to be smaller than the minimum distance between the first binding member and the second end, as the number of charge and discharge cycles of the electrode assembly increases, the binding force distribution of the first binding member on the electrode assembly deviates from the middle section face, so that the internal stress of a region of the electrode assembly deviating from the middle section face can increase. Thus, it can balance the internal stress difference of the electrode assembly itself, and the internal stress distribution of the electrode assembly can be as consistent as possible, thereby improving the stability and consistency of the charging and discharging performance of the electrode assembly and improving the cycle life of the battery cell.

In some embodiments, the peripheral side face of the electrode assembly includes a first attachment region, the first binding member is attached to at least a portion of the first attachment region, the first attachment region starts from the first end and extends in the axial direction, and a size of the first attachment region in the axial direction is smaller than 1/3 of a size of the main body in the axial direction. Thus, it can further reduce the internal stress difference of the electrode assembly and improve the consistency of the charging and discharging performance of the electrode assembly.

In some embodiments, the electrode assembly includes a first electrode plate, the first electrode plate includes a first active material layer located in the main body, the first active material layer includes a base body region and a thinning region, a thickness of the thinning region is smaller than a thickness of the base body region, and the thinning region is located on a side of the base body region close to the first end in the axial direction. The first binding member is misaligned with the thinning region in the axial direction. By arranging the thinning region, the stress concentration at an edge of the thinning region away from the base body region can be reduced, so as to reduce the risk of the fracture of the first electrode plate. The first binding member is misaligned with the thinning region, so that it can reduce the risk of damage of the thinning region due to the significant deformation of the first binding member.

In some embodiments, a distance between the first binding member and the thinning region is 1mm-2mm in the axial direction. Thus, it can further reduce the risk of the first binding member exerting the binding force on the thinning region, so as to reduce the risk of the significant deformation and damage of the electrode assembly corresponding to the thinning region.

In some embodiments, the at least one binding member includes a second binding member, and the minimum distance between the second binding member and the second end is smaller than the minimum distance between the second binding member and the first end. Thus, it can further improve the consistency of the internal stress of electrode assembly, so as to improve the consistency of the charge and discharge performance of the electrode assembly.

In some embodiments, the peripheral side face of the electrode assembly includes a second attachment region, and the second binding member is attached to at least a portion of the second attachment region, the second attachment region starts from the second end and extends in the axial direction, and a size of the second attachment region in the axial direction is smaller than 1/3 of a size of the main body in the axial direction. It can further reduce the internal stress difference of the electrode assembly and improve the consistency of the charging and discharging performance of the electrode assembly.

In some embodiments, the main body includes a middle section face located between the first end and the second end, and the second binding member and the first binding member are symmetrically arranged relative to the middle section face in the axial direction. It is conducive to further improving the consistency of the internal stress distribution of the electrode assembly, thereby improving the consistency of the charging and discharging performance of the electrode assembly.

In some embodiments, the at least one binding member includes a third binding member, the main body includes a middle section face located between the first end and the second end, and the third binding member covers the middle section face. Thus, the binding member can balance the internal stress of the electrode assembly and improve the stability of the electrode assembly in the casing.

In some embodiments, the at least one binding member includes a third binding member, the main body includes a middle section face located between the first end and the second end, the third binding member is attached to a region between the middle section face and the first end, and the third binding member is located on a side of the first binding member close to the second end. Thus, it can improve the consistency of the charge and discharge performance of the electrode assembly and improve the structural stability of the electrode assembly.

In some embodiments, a thickness of the first binding member is larger than a thickness of the third binding member. Thus, it is more conducive to improving the consistency of the internal stress of the electrode assembly, thereby improving the consistency of the charge and discharge performance of the electrode assembly.

In some embodiments, the main body includes a middle section face located between the first end and the second end. The at least one binding member includes a fourth binding member attached to a region between the middle section face and the second end and located on a side of the second binding member close to the first end. Thus, it can further improve the consistency of the internal stress of the electrode assembly.

In some embodiments, the at least one binding member includes a third binding member, and the fourth binding member and the third binding member are symmetrically arranged relative to the middle section face. Thus, it can further improve the consistency of the charging and discharging performance of the electrode assembly.

In some embodiments, the binding member is configured to expand after absorbing an electrolytic solution. Thus, it can ensure the binding effect of the binding member on the electrode assembly and facilitate the operation of the binding member and electrode assembly entering into the casing during the assembly process.

In some embodiments, the material of the binding member includes at least one of thermoplastic polyurethane, dextran gel and hydroxyl terminated polybutadiene polyurethane. Thus, the ratio of each component in the material of the binding member can be allocated reasonably, so that the binding member can have a suitable thickness after contacting with the electrolytic solution and expanding, and the binding member, which is formed after expanding, can have a suitable binding force on the electrode assembly.

In some embodiments, the binding member includes a first free end and a second free end in a circumferential direction of the electrode assembly. The binding member includes an overlapping part arranged between the first free end and the second free end, and in the circumferential direction of the electrode assembly, a central angle α of the overlapping part satisfies: α≤30°. Thus, it is beneficial to ensuring the binding force of the binding member on the electrode assembly and it can facilitate the mounting of the binding member.

In some embodiments, the binding member includes a first free end and a second free end in a circumferential direction of the electrode assembly, and the first free end and the second free end are spaced apart from each other. The main body includes an exposed region located between the first free end and the second free end and exposed to an exterior of the binding member; and in a circumferential direction of the electrode assembly, a central angle β of the exposed region satisfies: β≤ 180 °. It can ensure that the binding member provides a certain binding force to the electrode assembly, facilitate the electrolyte entering into an interior of the electrode assembly through the exposed region, and improve the wettability of the electrolyte to the electrode assembly. In addition, the exposed region can reserve a space for the expansion of the electrode assembly, so that it can reduce the risk of damage of the electrode assembly due to the expansion and deformation of itself.

In some embodiments, the binding member includes a plurality of first parts spaced apart from one another in a circumferential direction of the electrode assembly. It is beneficial to ensuring the binding force of the binding member on the electrode assembly to reduce the possibility of shaking of the electrode assembly. In addition, a gap among a plurality of first parts in the circumferential direction of the electrode assembly can be used as a passage for the electrolyte flowing, thereby improving the fluidity of the electrolyte. Furthermore, the gap among the first parts can reserve a space for the expansion of the electrode assembly, thereby further reducing the risk of damage of the electrode assembly due to the expansion and deformation of itself.

In some embodiments, the electrode assembly includes a first electrode plate wound into a plurality of coils. The binding member is misaligned with a tail end of an outermost coil of the first electrode plate in the circumferential direction of the electrode assembly. Thus, it is beneficial to reducing the risk of the stress concentration at the tail end of the first electrode plate in the electrode assembly, thereby reducing the risk of damage of the electrode assembly due to the deformation of itself.

In a second aspect, embodiments of the present application provide a battery, including the battery cell according to any one of the embodiments in the first aspect.

According to the embodiments of the present application, the battery has the same technical effect as the battery cell due to using the battery cell provided by any one of the embodiments as described above, which will not be repeated here.

In a third aspect, embodiments of the present application provide an electricity-consuming apparatus including the battery according to the embodiment in the second aspect, and the battery is configured to supply an electric power.

According to the embodiments of the present application, the electricity-consuming apparatus has the same technical effect as the battery due to using the battery provided by the embodiment as described above, which will not be repeated here.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a structural schematic view of a vehicle according to an embodiment of the present application;
Fig. 2 shows an exploded schematic view of a battery according to an embodiment of the present application;
Fig. 3 shows a structural schematic view of a battery module in a battery according to an embodiment of the present application;
Fig. 4 shows an exploded schematic view of a battery cell according to an embodiment of the present application;
Fig. 5 shows an exploded schematic view of a battery cell according to another embodiment of the present application;
Fig. 6 shows a partial cross-sectional structural schematic view of an electrode assembly in a battery cell according to an embodiment of the present application;
Fig. 7 shows an exploded schematic view of a battery cell according to another embodiment of the present application;
Fig. 8 shows an exploded schematic view of a battery cell according to another embodiment of the present application;
Fig. 9 shows an exploded schematic view of a battery cell according to another embodiment of the present application;
Fig. 10 shows an exploded schematic view of a battery cell according to another embodiment of the present application;
Fig. 11 shows a cross-sectional structural schematic view of a battery cell in a direction perpendicular to an axial direction according to an embodiment of the present application;
Fig. 12 shows a cross-sectional structural schematic view of a battery cell in a direction perpendicular to an axial direction according to another embodiment of the present application;
Fig. 13 shows a cross-sectional structural schematic view of a battery cell in a direction perpendicular to an axial direction according to another embodiment of the present application; and
Fig. 14 shows a cross-sectional structural schematic view of a battery cell in a direction perpendicular to an axial direction according to another embodiment of the present application.

In the drawings, the drawings are not drawn to actual scale.

Description of reference numerals:
1-vehicle; 1a-motor; 1b-controller;
10-battery; 11-first housing body; 12-second housing body;
20-battery module;
30-battery cell; 31-casing; 311-casing body; 311a-opening; 312-end cover; 32-electrode assembly; 32a-first attachment region; 32b-second attachment region; 321-main body; 321a-first end; 321b-second end; 321c-base body region; 321d-thinning region; 321e-exposed region; 321f-middle section face; 3211-first electrode plate; 3211a-tail end; 32111-first active material layer; 322-first electrode tab; 33-binding member; 33a-first free end; 33b-second free end; 33c-overlapping part; 33d-first part; 331-first binding member; 332-second binding member; 333-third binding member; 334-fourth binding member;
X-axial direction.

### DETAILED DESCRIPTION

In order to make the objects, technical solutions and advantages of the embodiments of the present application more clear, the technical solutions of the embodiments of the present application will be clearly described below in conjunction with the drawings of the embodiments of the present application. It is apparent that the described embodiments are a part of the embodiments of the present application, and not all of them. Based on the described embodiments of the present application, all other embodiments obtained by those skilled in the art fall within the scope of the present application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "C and/or D" can mean three cases that there is only C, there are C and D at the same time, and there is only D. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other sizes of the various components in the embodiments of the present application shown in the drawings, as well as the overall thickness, length and width, etc., of the integrated device are only exemplary descriptions, and should not constitute any limitation to the present application.

The "plurality" in the present application refers to two or more (including two).

In the present application, a battery cell may include a lithium-ion secondary battery cell, a lithium-ion primary battery cell, a lithium-sulfur battery cell, a sodium lithium ion battery cell, a sodium ion battery cell, a magnesium ion battery cell and the like, which is not limited in the embodiments of the present application. The battery cell can be in a shape of a cylinder, a flatten body, a cuboid or other shapes, which is not limited in the embodiments of the present application. Generally, the battery cell can be divided into three types in packaging: a cylindrical cell, a cuboid rectangle battery cell and soft pack battery cell, which is not limited in the embodiments of the present application.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode plate, a negative electrode plate and a separator. The battery cell mainly relies on the movement of metal ions between the positive electrode plate and the negative electrode plate to work. The positive electrode plate includes a positive electrode current collector and a positive electrode active material layer applied on the surface of the positive electrode current collector. The positive electrode current collector includes a positive electrode current collecting part and a positive electrode convex part protruding from the positive electrode current collecting part. The positive electrode current collecting part is coated with the positive electrode active material layer, and at least a portion of the positive electrode convex part is not coated with the positive electrode active material layer. The positive electrode convex part may be as a positive electrode tab. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode plate includes a negative electrode current collector and a negative electrode active material layer applied on the surface of the negative electrode current collector. The negative electrode current collector includes a negative electrode current collecting part and a negative electrode convex part protruding from the negative electrode current collecting part. The negative electrode current collecting part is coated with the negative electrode active material layer, and at least a portion of the negative electrode tab is not coated with the negative electrode active material layer. The negative electrode convex part may be as a negative electrode tab. The material of the negative electrode current collector may be copper, and the negative electrode active material layer includes a negative electrode active material, which may be carbon, silicon or the like. In order to ensure the high current passing through without fusing, a plurality of positive electrode tabs are stacked together, and a plurality of negative electrode tabs are stacked together. The material of the separator may be PP (polypropylene), PE (polyethylene) or the like. In addition, the electrode assembly may be a winding-type structure or a stack-type structure, which is not limited in the embodiments of the present application.

After finding the problem of low service life of the battery cell, the inventors conduct a systematic analysis and research on the structure and working process of the battery cell. The results show that as the number of the charging and discharging cycles of the electrode assembly of the battery cell increases, an anode plate of the electrode assembly gradually expands, and the expansion amount of a middle region of the anode plate is larger than the expansion amount at two ends of the anode plate in the axial direction of the electrode assembly. Therefore, the nearer the middle region of the electrode assembly in the axial direction, the larger the internal stress of the electrode assembly is; the nearer the two ends of the electrode assembly in the axial direction, the smaller the internal stress is. As the number of charge and discharge cycles of the electrode assembly increases, the difference in internal stress between the middle region and two ends of the electrode assembly gradually increases. The consistency of the charge and discharge performance of the electrode assembly gradually decreases, and the energy storage of the corresponding battery cell gradually decreases. This seriously affects the service life of the battery cell.

Based on the above problem found by the inventors, the inventors have improved the structure of the battery cell. The technical solution described in embodiments of the present application is applicable to a battery cell, a battery including the battery cell and an electricity-consuming apparatus using the battery.

The battery cell provided by the embodiments of the present application includes a casing, an electrode assembly and at least one binding member. The electrode assembly is arranged in the casing. The electrode assembly includes a main body. The main body includes a first end and a second end arranged opposite to each other in an axial direction of the electrode assembly. At least one binding member is arranged between a peripheral side face of the main body and the casing. The at least one binding member includes a first binding member. The minimum distance between the first binding member and the first end is smaller than the minimum distance between the first binding member and the second end.

In the battery cell provided by the embodiments of the present application, by setting the minimum distance between the first binding member and the first end to be smaller than the minimum distance between the first binding member and the second end, the first binding member is asymmetrically arranged relative to two ends of the main body. The binding force distribution of the first binding member on the electrode assembly deviates from the middle section face of the main body, and the internal stress in a region where the main body deviates from the middle section face can be enhanced due to the binding force of the first binding member, so as to balance the internal stress difference between this region and a region close to the middle section face of the electrode assembly, and improve the consistency of the internal stress of the electrode assembly and the consistency of the charging and discharging performance of the electrode assembly, thereby improving the cycle life of the battery cell.

The electricity-consuming apparatus may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixedtype or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming apparatus.

For the convenience of explanation, the following embodiments take a vehicle being as the electricity-consuming apparatus as an example to illustrate.

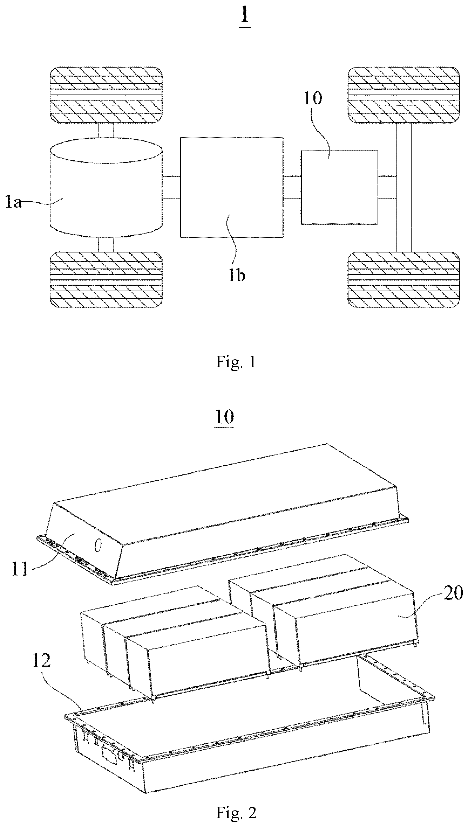

As shown in Fig. 1, a battery 10 may be arranged inside the vehicle 1, and the battery 10 may be arranged in the bottom, the front or the back of the vehicle 1. The battery 10 can be used to supply power to the vehicle 1, for example, the battery 2 can be used as an operating power source of the vehicle 1.

The vehicle 1 may further include a controller 1b and a motor 1a. The controller 1b can be used to control the battery 10 to supply power to the motor 1a, for example, for satisfying the work electricity needs of the vehicle 1 during starting, navigating and driving.

In some embodiments of the present application, the battery 10 can not only serve as an operating power source for the vehicle 1, but also as a driving power source for the vehicle 1, so as to replace or partially replace the fuel or the natural gas and provide the driving power for the vehicle 1.

As shown in Fig. 2, the battery 10 includes a battery cell (not shown in Fig. 2). The battery 10 may further include a housing for accommodating the battery cell.

The housing is used to accommodate the battery cell, and the housing can be of various structural forms. In some embodiments, the housing may include a first housing body 11 and a second housing body 12. The first housing body 11 and the second housing body 12 cover each other. The first housing body 11 and the second housing body 12 jointly define an accommodating space for accommodating the battery cell. The second housing body 12 may be a hollow structure having an opening at an end, and the first housing body 11 may be a platelike structure. The first housing body 11 is covered with an opening side of the second housing body 12 to form the housing having the accommodating space. Or each of the first housing body 11 and the second housing body 12 may be a hollow structure having an opening on a side. The side of the first housing body 11 with the opening is covered with the side of the second housing body 12 with the opening to form the housing having the accommodation space. Of course, the first housing body 11 and the second housing body 12 can be in various shapes, such as a cylinder and a rectangular parallelepiped.

In order to improve the sealing performance after the first housing body 11 is connected with the second housing body 12, a sealing member, such as a sealant and a sealing ring, may be arranged between the first housing body 11 and the second housing body 12.

It can be assumed that the first housing body 11 is covered with the second housing body 12, the first housing body 11 can be called an upper housing cover, and the second housing body 12 can be called a lower housing body

In the battery 10, there may be one or more battery cells. If there are a plurality of battery cells, the plurality of battery cells can be connected in series, in parallel or in hybrid. The hybrid connection means that the plurality of battery cells are connected in series and parallel in combination. The plurality of battery cells can be directly connected in series, parallel or hybrid together, and then a whole composed of the plurality of battery cells can be accommodated in the housing. Or the plurality of battery cells can be connected in series, in parallel or hybrid to form the battery module 20. A plurality of battery modules 20 are connected in series, in parallel or in hybrid to form a whole and are accommodated in the housing.

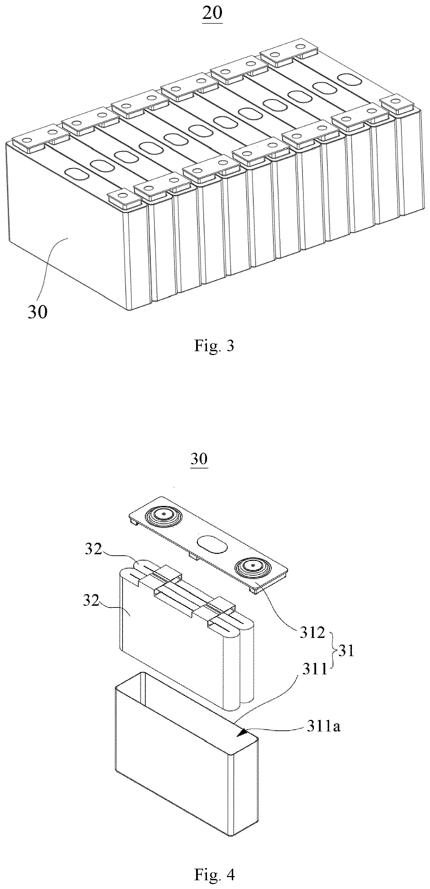

In some embodiments, as shown in Fig. 3, Fig. 3 is a structural schematic view of a battery module 20 shown in Fig. 2. In the battery module 20, the battery module 20 has a plurality of battery cells 30. The plurality of battery cells 30 are connected in series, in parallel or in hybrid firstly to form the battery module 20. The plurality of battery modules 20 are connected in series, in parallel or in hybrid to form a whole and are accommodated in the housing.

In some embodiments, the plurality of battery cells 30 in the battery module 20 can be electrically connected through a current collector to realize the parallel connection, the series connection or the hybrid connection of the plurality of battery cells 30 in the battery module 20.

Referring to Fig. 4, Fig. 4 is an exploded schematic view of the battery cell 30 shown in Fig. 3. The battery cell 30 provided by the embodiments of the present application includes an electrode assembly 32 and a casing 31, the casing 31 is provided with an accommodating cavity, and the electrode assembly 32 is accommodated in the accommodating cavity.

In some embodiments, the casing 31 may include a casing body 311 and an end cover 312. The casing body 311 is a hollow structure with an opening on a side. The end cover 312 covers the opening 311a of the casing body 311 and forms a sealing connection to form a sealing space for accommodating the electrode assembly 32 and the electrolyte.

When assembling the battery cell 30, the electrode assembly 32 can be placed into the casing body 311 firstly, then the end cover 312 covers the opening 311a of the casing body 311, and then the electrolyte is injected into the casing body 311 via an electrolyte injection port on the end cover 312.

In some embodiments, the casing 31 may also contain the electrolyte, such as electrolyte solution. The casing 31 may have various structural forms.

Fig. 4 shows a structural schematic view of a battery cell according to an embodiment of the present application.

The casing body 311 can be in various shapes, such as cylinder and cuboid. The shape of the casing body 311 can be determined according to the specific shape of the electrode assembly 32. For example, if the electrode assembly 32 has a cylindrical structure, the casing body 311 can be a cylindrical structure. If the electrode assembly 32 has a cuboid structure, the casing body 311 may be a cuboid structure. In Fig. 4, exemplarily, each of the casing body 311 and the electrode assembly 32 is the cuboid structure.

The casing body 311 can be made of a variety of materials, such as copper, iron, aluminum, stainless steel and aluminum alloy, which is not particularly limited in the embodiment of the present application.

There may be one or more electrode assemblies 32 accommodated in the casing body 311. In Fig. 4, there is two electrode assemblies 32 accommodated in the casing body 311.

In some embodiments, the electrode assembly 32 further includes a positive electrode plate, a negative electrode plate and a separator. The electrode assembly 32 may be a winding-type structure formed by winding the positive electrode plate, the separator and the negative electrode plate. Or the electrode assembly 32 may be a stack-type structure formed by a stacked arrangement of the positive electrode plate, the separator and the negative electrode plate.

The positive electrode plate may include a positive electrode current collector and a positive electrode active material layer. The positive electrode active material layer is applied on a surface of the positive electrode current collector. The negative electrode plate may include a negative electrode current collector and a negative electrode active material layer. The negative electrode active material layer is applied on a surface of the negative current collector. A separator is located between the positive electrode plate and the negative electrode plate to isolate the positive electrode plate from the negative electrode plate, so as to reduce the risk of short circuit between the positive electrode plate from the negative electrode plate.

Tabs in the electrode assembly 32 are classified as a positive electrode tab and a negative electrode tab. The positive electrode tab may be a portion of the positive electrode current collector that is not coated with a positive electrode active material layer. The negative electrode tab may be a portion of the negative electrode current collector that is not coated with the negative electrode active material layer.

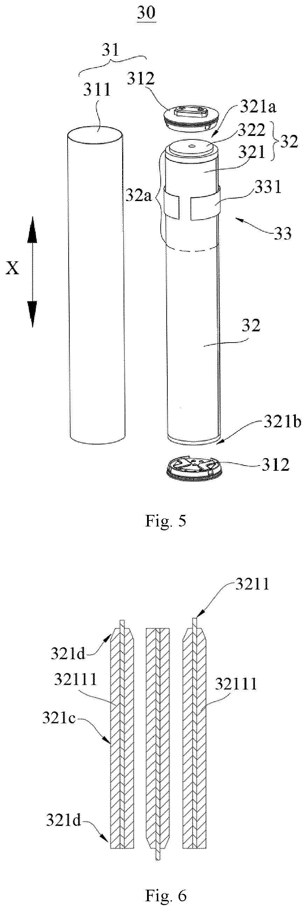

Fig. 5 shows an exploded schematic view of a battery cell 30 according to another embodiment of the present application.

As shown in Fig. 5, the battery cell 30 provided by the embodiments of the present application includes a casing 31, an electrode assembly 32 and at least one binding member 33. The electrode assembly 32 is arranged in the casing 31, and the electrode assembly 32 includes a main body 321, and the main body 321 includes a first end 321a and a second end 321b arranged opposite to each other in an axial direction X of the electrode assembly 32. At least one binding member 33 is arranged between a peripheral side face of the main body 321 and the casing 31. At least one binding member 33 includes a first binding member 331, and the minimum distance between the first binding member 331 and the first end 321a is smaller than the minimum distance between the first binding member 331 and the second end 321b.

Optionally, the electrode assembly 32 may be in a shape of cylinder or cuboid, and electrode plates of the electrode assembly 32 can be a winding type or stack type. In the embodiments that the electrode assembly 32 is in a shape of rectangle, a surface of the main body 321 has an arc-shaped region and a planar region, and the axial direction X of the electrode assembly 32 may be a direction parallel to an extending direction of the arc-shaped region.

Optionally, the electrode assembly 32 may include one electrode tab or two electrode tabs. In the embodiments that the electrode assembly 32 includes one electrode tab, the electrode tab can be led out from the first end 321a of the main body 321 or from the second end 321b of the main body 321. In the embodiments that the electrode assembly 32 includes two electrode tabs, the two electrode tabs can be led out from the first end 321a and the second end 321b respectively, or both electrode tabs can be led out from the first end 321a, or both electrode tabs can be led out from the second end 321b, which are not limited here.

Optionally, at least one binding member 33 may include only the first binding member 331, or may include other binding members 33. The shape, structure or position relationship relative to the electrode assembly 32 of different binding members 33 may be the same as or different from the first binding member 331.

Optionally, the number of first binding members 331 may be one or more, which can be selected according to the actual needs. In the embodiments in which there are a plurality of first binding members 331, the plurality of first binding members 331 can be arranged in the axial direction X of electrode assembly 32, and adjacent two first binding members 331 can be spaced apart from each other or adjacent to each other.

The peripheral side face of the main body 321 is a surface where the main body is located between the first end 321a and the second end 321b. At least one binding member 33 is arranged between the peripheral side face of the main body 321 and the casing 31, thus, before the battery cell 30 is charged and discharged, the binding member 33 can contact with both the peripheral side face of the main body 321 and the casing 31, or the binding member 33 can contact with either of the casing 31 and the main body 321, or the binding member 33 can be spaced apart from the casing 31 and the main body 321. As the number of the charging and discharging cycles of the battery cell 30 increases, the electrode assembly 32 gradually expands, and finally the binding member 33 abuts against a place between the peripheral side face of the main body 321 and the casing 31 to apply a certain binding force on the main body 321.

The direction of the binding force of the binding member 33 on the electrode assembly 32 can be in a direction that opposes a direction of the expansion force of the electrode assembly 32 itself, and the binding member 33 can be arranged in a radial direction of the electrode assembly 32.

The minimum distance between the binding member 33 and the first end 321a can be the distance between an end of the binding member 33 close to the first end 321a and the first end 321a. Similarly, the minimum distance between the binding member 33 and the second end 321b can be the distance between an end of the binding member 33 close to the second end 321b and the second end 321b.

The main body 321 has a middle section face 321f located between the first end 321a and the second end 321b, and a distance from the first end 321a to the middle section face 321f is equal to a distance from the second end 321b to the middle section face 321f.

The minimum distance between the first binding member 331 and the first end 321a is smaller than the minimum distance between the first binding member 331 and the second end 321b, and the first binding member 331 is arranged to be close to the first end 321a. Optionally, the first binding member 331 can be arranged to cover the middle section face 321f, or arranged to be spaced apart from the middle section face 321f, or an end of the first binding member 331 can be arranged tightly against the middle section face 321f.

As the number of charge and discharge cycles of electrode assembly 32 increases, the expansion of an anode electrode plate of electrode assembly 32 gradually increases, and the closer a region of the electrode assembly 32 is to the middle section face 321f, the larger the expansion amount of the region is. If there is no binding member 33, the closer the electrode assembly 32 is to the middle section face 321f, the larger the internal stress of electrode assembly 32 itself is. In addition, as the electrode assembly 32 gradually expands, the binding force of the first binding member 331 on the electrode assembly 32 gradually increases. Since the minimum distance between the first binding member 331 and the first end 321a is smaller than the minimum distance between the first binding member 331 and the second end 321b, i.e. the first binding member 331 is arranged asymmetrically relative to the middle section face 321f in the axial direction X of the main body 321, the binding force distribution of the first binding member 331 on the electrode assembly 32 deviates from the middle section face 321f, i.e. the internal stress in a region of the electrode assembly 32 deviating from the middle section face 321f and close to the first end 321a can be enhanced. Thus, the difference in internal stress between at least a portion of a region of the electrode assembly 32 corresponding to the first binding member 331 and a region close to the middle section face 321f of the first binding member 331 can be balanced, so that the internal stresses of the electrode assembly 32 corresponding to the two region can be as consistent as possible, thereby providing the consistency in the charging and discharging performance of the electrode assembly 32.

Optionally, in the axial direction X of the main body 321, the binding forces of the first binding member 331 on all places of the electrode assembly 32 can be equal or distributed in a curve. Exemplarily, in the axial direction X from the middle section face 321f to the first end 321a, the binding force of the first binding member 331 on the electrode assembly 32 can gradually increase, so as to balance the internal stress difference of the electrode assembly 32 itself.

In the battery cell 30 provided by the embodiments of the present application, at least one binding member 33 is arranged between the peripheral side face of the main body 321 and the casing 31, and the at least one binding member 33 includes the first binding member 331. By setting the minimum distance between the first binding member 331 and the first end 321a to be smaller than the minimum distance between the first binding member 331 and the second end 321b, as the number of the charge and discharge cycles of electrode assembly 32 increases, the binding force distribution of the first binding member 331 on electrode assembly 32 can be arranged to deviate from the middle section face 321f, so that the internal stress in the region of the electrode assembly 32 deviating from the middle section face 321f can be enhanced. Thus, it can balance the internal stress difference of electrode assembly 32 itself, so that the internal stress distribution of electrode assembly 32 is as consistent as possible, so as to improve the stability and consistency of the charging and discharging performance of electrode assembly 32, thereby improving the cycle life of battery cell 30.

Optionally, the first binding member 331 can be arranged in any region between the first end 321a and the middle section face 321f, or the first binding member 331 can be partially arranged on the side close to the second end 321b of the middle section face 321f, which can be selected as needed and is not limited here.

In some embodiments, the peripheral side face of electrode assembly 32 includes a first attachment region 32a, and the first binding member 331 is attached to at least a partial region of the first attachment region 32a. The first attachment region 32a starts from the first end 321a and extends in the axial direction X, and the size of the first attachment region 32a in the axial direction X is smaller than 1/3 of the size of the main body 321 in the axial direction X.

Optionally, in the axial direction X of the electrode assembly 32, the first binding member 331 can be attached to all regions of the first attachment region 32a or to a partial region of the first attachment region 32a.

Optionally, the first binding member 331 is attached to the first attachment region 32a, the first binding member 331 can be connected to the main body 321 of the first attachment region 32a as a whole by bonding or other means, or the first binding member 331 can be arranged to abut against only the main body 321 of the first attachment region, as long as the first binding member 331 generates the binding force on the main body 321.

It can be understood that the expansion deformation of the electrode assembly 32 becomes smaller and smaller from the middle section face 321f of the main body 321 to the first end 321a, and the expansion deformation difference becomes larger and larger between a region of the main body 321 close to the middle section face 321f and a region of the main body 321 close to the first end 321a as it approaches closer and closer to the first end 321a. Therefore, the arrangement of the first binding member 331 in the first attachment region 32a is more conducive to balancing the internal stress difference between the region of the first attachment region 32a fitting with the first binding member 331 and the region of the electrode assembly 32 close to the middle section face 321f, thereby improving the consistency and stability of the charging and discharging performance of the electrode assembly 32.

Fig. 6 shows a cross-sectional structural schematic view of the battery cell in the axial direction according to the embodiments of the present application

As shown in Fig. 6, in some embodiments, the electrode assembly 32 includes a first electrode plate 3211, and the first electrode plate 3211 includes a first active material layer located in the main body 321. The first active material layer 32111 includes a base body region 321c and a thinning region 321d. A thickness of the thinning region 321d is smaller than a thickness of the base body region 321c, and the thinning region 321d is located on a side of the base body region 321c close to the first end 321a in the axial direction X.

Optionally, the first electrode plate 3211 may be a positive electrode plate or a negative electrode plate. Therefore, one of the positive and negative electrode plates can include the base body region 321c and the thinning region 321d, or each of the positive electrode plate and negative electrode plate can include the base body region 321c and the thinning region 321d.

By reducing the thickness of the thinning region 321d, the stress concentration at an edge of the thinning region 321d away from the base body region 321c, i.e. the first end 321a of the main body 321, can be reduced during the process of the cold pressing formation of the first electrode plate 3211, thereby reducing the risk of fracture of the first electrode plate 3211.

Optionally, the surface of the thinning region 321d can be a flat plane or a curved plane. The thicknesses of all places of the first electrode plate 3211 in the thinning region 321d can be equal or unequal, which can be selected as needed and is not limited here.

In some embodiments, the first binding member 331 is misaligned with the thinning region 321d in the axial direction X.

The first binding member 331 is misaligned with the thinning region 321d, that is, the thinning region 321d is not provided with a first binding member 331, nor does it overlap with the first binding member 331. Due to the thickness of the thinning region 321d of the first electrode plate 3211 being smaller than the thickness of the base body region 321c, a gap between the first electrode plate 3211 of the thinning region 321d is larger than a gap between the first electrode plate 3211 of the base body region 321c, and the strength of the first electrode plate 3211 of the thinning region 321d is lower than the strength of the first electrode plate 3211 of the base body region 321c. Under an external force, the thinning region 321d is more prone to deformation. Therefore, by arranging the first binding member 331 to be misaligned with the thinning region 321d, the risk of significant deformation and damage to the thinning region 321d caused by the first binding member 331 can be reduced.

Optionally, the first binding member 331 and the thinning region 321d can be arranged to be adjacent to each other or spaced apart from each other. In the embodiments that the first binding member 331 and the thinning region 321d are spaced apart from each other, the distance between the first binding member 331 and the thinning region 321d will not be limited, which can be selected according to the actual needs.

In some embodiments, in the axial direction X, the distance between the first binding member 331 and the thinning region 321d is 1mm to 2mm. Specifically, the distance between the first binding member 331 and the thinning region 321d may be 1mm, 1.5mm, 2mm or the like.

It can be understood that the distance between the first binding member 331 and the thinning region 321d can be the distance from an end of the first binding member 331 close to the thinning region 321d to an end of the thinning region 321d close to the first binding member 331.

By setting the distance between the first binding member 331 and the thinning region 321d to be 1mm to 2mm, the risk of the binding force generated by the first binding member 331 on the thinning region 321d can be further reduced, so as to reduce the risk of the significant deformation and damage of the electrode assembly 32 corresponding to the thinning region 321d.

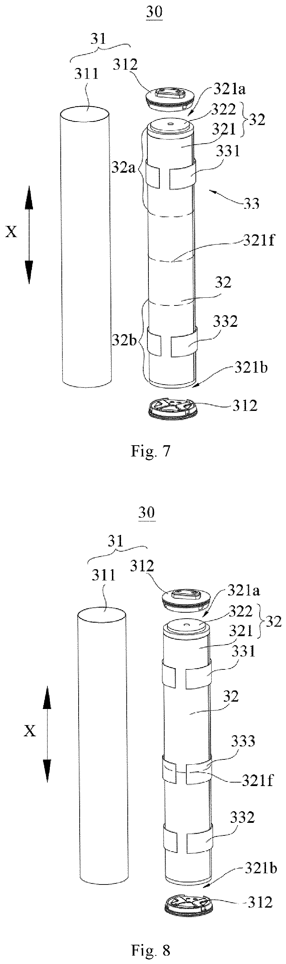

Fig.7 shows an exploded structural schematic view of a battery cell 30 provided by another embodiment of the present application.

As shown in Fig. 7, in some embodiments, at least one binding member 33 includes a second binding member 332, and the minimum distance between the second binding member 332 and the second end 321b is smaller than the minimum distance between the second binding member 332 and the first end 321a.

Optionally, the thicknesses, shapes or structures of the second binding member 332 and the first binding member 331 may be the same or different.

Optionally, in the axial direction X, the second binding member 332 and the first binding member 331 can be symmetrically arranged relative to the middle section face 321f or asymmetrically arranged relative to the middle section face 321f. The first binding member 331 is arranged to be closer to an end, and the second binding member 332 is arranged to be closer to the second end 321b.

The minimum distance between the second binding member 332 and the second end 321b is smaller than the minimum distance between the second binding member 332 and the first end 321a, the second binding member 332 is arranged to be closer to the second end 321b in the axial direction X. As the number of the charge and discharge cycles of the electrode assembly 32 increases, the expansion amount of electrode assembly 32 gradually increases, and the binding force of the second binding member 332 on electrode assembly 32 gradually increases. Since the second binding member 332 is arranged to be closer to the second end 321b, the binding force distribution of the second binding member 332 on the electrode assembly 32 deviates from the middle section face 321f and is closer to the second end 321b, so that the internal stress of a region of the electrode assembly 32 deviating from the middle section face 321f and close to the second end 321b can be enhanced. Thus, it can balance the internal stress difference between at least a partial region of the electrode assembly 32 corresponding to the first binding member 331 and a region close to the middle section face 321f, so that the internal stress of the electrode assembly 32 can be as consistent as possible, thereby further improving the consistency of the charging and discharging performance of electrode assembly 32.

It can be understood that the binding force of the binding member 33 on the electrode assembly 32 can be adjusted by changing the thickness or the like of the binding member 33. Therefore, by adjusting the thicknesses of the first binding member 331 and the second binding member, after the internal stress of the electrode assembly 32 is enhanced by the first binding member 331 and the second binding member 332, the internal stress of the electrode assembly 32 can be as consistent as possible with the internal stress of the regions corresponding to the first binding member 331 and the second binding member 332 respectively. Thus, it can further improve the consistency of the charging and discharging performance of the electrode assembly 32.

Optionally, the second binding member 332 can be arranged in any region between the second end 321b and the middle section face 321f, or the second binding member 332 can be partially arranged on a side of the middle section face 321f close to the first end 321a, which can be selected according to the actual needs and is not limited here.

In some embodiments, the peripheral side face of electrode assembly 32 includes a second attachment region 32b, and the second binding member 332 is attached to at least a portion of the second attachment region 32b. The second attachment region 32b starts from the second end 321b and extends in the axial direction X, and a size of the second attachment region 32b in the axial direction is smaller than 1/3 of a size of the main body 321 in the axial direction X.

Optionally, in the axial direction X, the second binding member 332 can be attached to all regions of the second attachment region 32b or to a partial region of the second attachment region 32b.

Optionally, the second binding member 332 can be connected to the second attachment region 32b by bonding or other means, or the second binding member 332 can be arranged to abut against only the second attachment region 32b, as long as the second binding member 332 generates the binding force on the main body 321.

It can be understood that the expansion deformation of the electrode assembly 32 is gradually smaller as a region of the main body 321 is from the middle section face 321f to the second end 321b, and the expansion deformation difference between a region of the main body 321 close to the second end 321b and a region of the main body 321 close to the middle section face 321f is larger as a region of the main body 321 gradually approaches to the second end 321b. Therefore, the arrangement of the second binding member 332 in the second attachment region 32b is more conducive to balancing the internal stress difference between the region of the second attachment region 32b fitting with the second binding member 332 and the region of the electrode assembly 32 close to the middle section face 321f, thereby improving the consistency and stability of the charging and discharging performance of the electrode assembly 32.

In some embodiments, the second binding member 332 and the first binding member 331 are symmetrically arranged relative to the middle section face 321f in the axial direction X.

In this way, the binding force of the first binding member 331 on the electrode assembly 32 can be symmetrically distributed relative to the middle section face 321f, which is conducive to further improving the consistency of the internal stress distribution of the electrode assembly 32, thereby improving the consistency of the charge discharge performance of electrode assembly 32.

Fig. 8 shows an exploded structural schematic view of a battery cell 30 according to another embodiment of the present application.

As shown in Fig. 8, in some embodiments, at least one binding member 33 includes a third binding member 333, and the third binding member 333 covers the middle section face 321f.

Specifically, the binding forces of the first binding member 331 and the third binding member 333 on the electrode assembly 32 can be adjusted, so as to make the binding force of the first binding member 331 on the electrode assembly 32 less than the binding force of the third binding member 333 on the electrode assembly 32. Therefore, the third binding member 333 has a certain fixing effect on the electrode assembly 32, while the internal stress of the electrode assembly 32 can be balanced, thereby improving the stability of the electrode assembly 32 in the casing 31.

In the embodiments in which the binding member 33 includes all of the first binding member 331, the second binding member 332 and the third binding member 333, the three can be arranged to be spaced apart from one another. According to the relative positions of the three in the axial direction X of the electrode assembly 32, the three can be provided with the appropriate thicknesses or materials, so that the internal stress of the electrode assembly 32 can be as consistent as possible after the three exert the binding forces on the electrode assembly 32, thereby improving the consistency of the charging and discharging performance of electrode assembly 32.

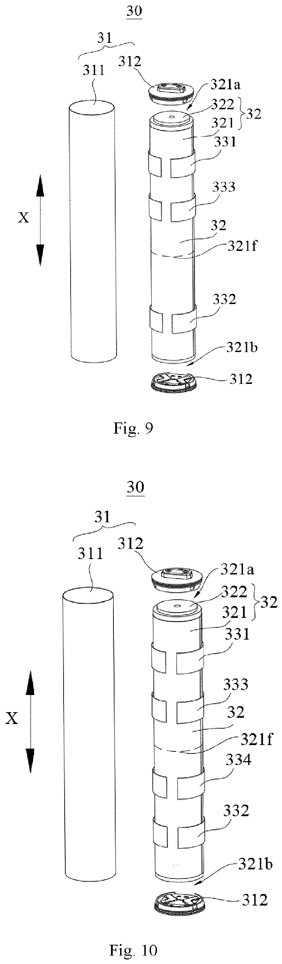

Fig. 9 shows an exploded structural schematic view of a battery cell 30 according to another embodiment of the present application.

As shown in Fig. 9, in some other embodiments, the third binding member 333 is attached to a region between the middle section face 321f and the first end 321a, and the third binding member 333 is located on a side of the first binding member 331 close to the second end 321b.

Specifically, by providing the first binding members 331 and the third binding members 333 with different thicknesses or materials so that the binding force of the third binding member 333 on the electrode assembly 32 can be less than the binding force of the first binding member 331 on the electrode assembly 32, the internal stresses of regions of the electrode assembly 32 corresponding to the first binding members 331 and the third binding members 333 respectively can be as consistent as possible. According to the arrangement, it can still improve the consistency of the charging and discharging performance of the electrode assembly 32 and improve the structural stability of electrode assembly 32.

Optionally, the thicknesses of the first binding member 331 and the third binding member 333 can be different, or the materials of the two can be different, or both the thicknesses and materials of the two can be different, so that the binding forces of the two on the electrode assembly 32 can be different.

In some embodiments, the thickness of the first binding member 331 is larger than the thickness of the third binding member 333.

It can be understood that the larger the thickness of the binding member 33 is, the larger the space occupied between the casing 31 and the electrode assembly 32 is. As the electrode assembly 32 expands, the binding force of the binding member 33 on the electrode assembly 32 increases. Due to the arrangements that the first binding member 331 is closer to the first end 321a than the third binding member 333 to the first end 321a, and the third binding member 333 is closer to the middle section face 321f than the first binding member 331 to the middle section face 321f, the expansion amount and internal stress of the electrode assembly 32 corresponding to the first binding member 331 are smaller than the expansion amount and internal stress of the electrode assembly 32 corresponding to the third expansion member. Therefore, the thickness of the first binding member 331 is larger than the thickness of the third binding member 333, so that it is more conducive to improving the consistency of internal stress in electrode assembly 32, thereby improving the consistency of the charge discharge performance of electrode assembly 32.

According to the positions of the electrode assembly 32 corresponding to the first binding member 331 and the third binding member 333 respectively, the first binding member 331 and the third binding member 333 can be provided with the appropriate thicknesses respectively, so that the internal stresses of the electrode assembly 32 corresponding to the first binding member 331 and the third binding member 333 can be as consistent as possible.

Fig. 10 shows an exploded structural schematic view of a battery cell 30 according to another embodiment of the present application.

As shown in Fig. 10, in some embodiments, at least one binding member 33 includes a fourth binding member 334, the fourth binding member 334 is attached to the region between the middle section face 321f and the second end 321b, and the fourth binding member 334 is located on a side of the second binding member 332 close to the first end 321a.

Specifically, the first binding member 331, the second binding member 332 and the fourth binding member 334 can have the informations of different thicknesses, materials and the like, so that the first binding member 331, second binding member 332 and fourth binding member 334 each have an appropriate binding member force on the electrode assembly 32, so that the internal stresses of the electrode assembly 32 corresponding to the three can be as consistent as possible.

In the embodiments that at least one binding member 33 includes all of the first binding member 331, the second binding member 332, the third binding member 333 and the fourth binding member 334, the third binding member 333 can be symmetrically arranged relative to the middle section face 321f or asymmetrically arranged relative to the middle section face 321f.

In some embodiments, at least one binding member 33 includes the third binding member 333, and the fourth binding member 334 and the third binding member 333 are symmetrically arranged relative to the middle section face 321f.

Specifically, the third binding member 333 and the fourth binding member 334 each can apply the equal binding force on the electrode assembly 32. Since portions of the electrode assembly 32 corresponding to the third binding member 333 and the fourth binding member 334 respectively can be symmetrically arranged relative to the middle section face 321f, the internal stresses of the portions of the electrode assembly 32 corresponding to the third binding member 333 and the fourth binding member 334 can be substantially equal. Therefore, the internal stresses of the portions of the electrode assembly 32 corresponding to the third binding member 333 and the fourth binding member 334 can be substantially consistent with each other, so that it is conducive to further improving the consistency of the charging and discharging performance of electrode assembly 32.

In the embodiments that the third binding member 333 and the fourth binding member 334 are symmetrically arranged relative to the middle section face 321f, the first binding member 331 and the second binding member 332 can be symmetrically arranged relative to the middle section face 321f or asymmetrically arranged relative to the middle section face 321f. It can be understood that the first binding member 331 and second binding members 332 is arranged symmetrically about the middle section face 321f, at the same time the third binding member 333 and the fourth binding member 334 symmetrically about the middle section face 321f, so that it can better improve the consistency of the charging and discharging performance of electrode assembly 32.

Optionally, the binding member 33 can be an elastic member or a non-elastic member. The binding member 33 can be a member whose shape and structure have been determined before being assembled, or a structure with a stable structure and performance formed after or during the assembly of battery cell 30.

In some embodiments, the binding member 33 is configured to expand after absorbing the electrolyte.

Optionally, in the embodiments that the binding member 33 includes the first binding member 331, the second binding member 332, the third binding member 333 and the fourth binding member 334, one or more of the first binding member 331, the second binding member 332, the third binding member 333 and the fourth binding member 334 can be configured to expand after absorbing the electrolyte, while the other(s) in the binding member 33 adopts a different structural form.

During the assembly process of battery cell 30, the binding member 33 has a smaller volume before it expands when contacting with the electrolyte, so that it is conducive to the binding member 33 together with the electrode assembly 32 entering into the casing 31. After adding the electrolyte to the battery cell 30, the binding member 33 expands to a predetermined thickness and volume, which can facilitate forming a certain binding force on the electrode assembly 32 during the subsequent usage process.

Therefore, by configuring the binding member 33 to expand after absorbing the electrolyte, it can ensure the binding effect of the binding member 33 on the electrode assembly 32 while facilitating the operation of the binding member 33 and the electrode assembly 32 entering into the casing smoothly during the assembly process.

In order to allow the binding member 33 to expand after absorbing the electrolyte, various materials of the binding member 33 can be arranged. In some embodiments, the material of the binding member 33 includes at least one of thermoplastic polyurethane, dextran gel, and hydroxyl terminated polybutadiene polyurethane.

Optionally, the material of the binding member 33 can include one of thermoplastic polyurethane, dextran gel and hydroxyl terminated polybutadiene polyurethane, or the material of the binding member 33 can include two or all of thermoplastic polyurethane, dextran gel and hydroxyl terminated polybutadiene polyurethane.

In the embodiments that the binding member 33 includes the first binding member 331, the second binding member 332, the third binding member 333 and the fourth binding member 334, optionally, the materials of different binding members 33 can be the same or different, which can be selected as needed.

It can be understood that the expansion coefficients of different materials are different. For example, the expansion coefficient of thermoplastic polyurethane is 30 to 40, the expansion coefficient of dextran gel is 1 to 4, and the expansion coefficient of hydroxyl terminated polybutadiene polyurethane is 0.3 to 8. Therefore, the material of the binding member 33 includes at least one of thermoplastic polyurethane, dextran gel and hydroxyl terminated polybutadiene polyurethane. The ratio of each component of the materials of the binding member 33 can be reasonably distributed, so that the binding member 33 has an appropriate thickness after expanding when contacting with the electrolyte, and the binding member 33 formed after expansion has the appropriate binding force on the electrode assembly 32.

Optionally, in a circumferential direction of electrode assembly 32, the binding member 33 can be arranged around one circumference, less than one circumference or more than one circumference of electrode assembly 32, which can be selected as needed and is not limited here.

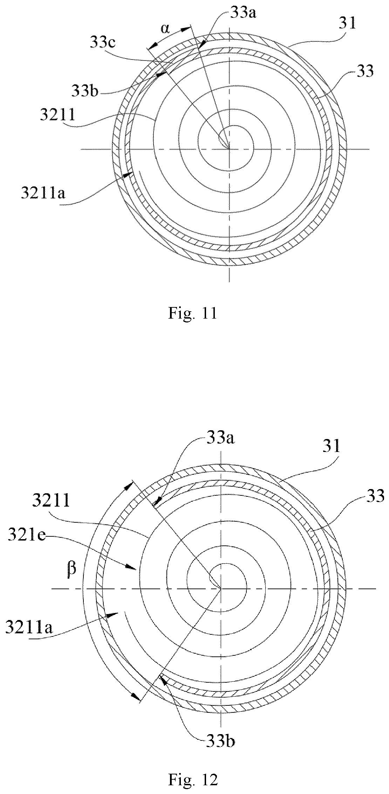

Figs. 11 to 14 show cross-sectional structural schematic views of battery cells in a direction perpendicular to the axial direction according to different embodiments respectively.

As shown in Figs. 11 to 13, in some embodiments, the binding member 33 includes a first free end 33a and a second free end 33b in the circumferential direction of the electrode assembly 32. Specifically, the binding member 33 extends from the first free end 33a to the second free end 33b in the circumferential direction of electrode assembly 32.

Optionally, the structural forms of different binding members 33 in the same battery cell 30 can be the same or different, which can be selected as specific needs.

Optionally, the first free end 33a and the second free end 33b can be overlapped with each other or spaced apart from each other. When the first free end 33a and the second free end 33b are overlapped with each other, the binding member 33 exactly covers one circumference of the electrode assembly 32. When the first free end 33a and the second free end 33b is spaced apart from each other, the binding member 33 covers the electrode assembly 32 less than or more than one circumference in the circumferential direction of the electrode assembly 32.

As shown in Fig. 11, in some embodiments, the binding member 33 includes an overlapping part 33c located between the first free end 33a and the second free end 33b. In the circumferential direction of the electrode assembly 32, a central angle α of the overlapping part 33c satisfies: α≤30°.

In the above embodiments, the binding member 33 covers the electrode assembly 32 more than one circumference in the circumferential direction of the electrode assembly 32.

Optionally, the central angle α of the overlapping part 33c may be 5°, 10°, 15°, 20°, 25°, 30° or the like.

The binding member 33 is provided with the overlapping part 33c and the central angle α of the overlapping part 33c satisfies α≤30°, it is beneficial to ensuring the binding force of the binding member 33 on the electrode assembly 32 and facilitating the mounting of the binding member 33.

As shown in Fig. 12, in some other embodiments, the first free end 33a and the second free end 33b are spaced apart from each other, and the main body 321 has an exposed region 321e located between the first free end 33a and the second free end 33b and exposed to an exterior of the binding member 33. In the circumferential direction of the electrode assembly 32, a central angle β of the exposed region 321e satisfies: β≤ 180 °.

Optionally, the central angle β of the exposed region 321e may be 30°, 45°, 60°, 90°, 120°, 150°, 180° or the like.

The electrode assembly 32 is provided with the exposed region 321e located between the first free end 33a and the second free end 33b, so that it can ensure that the binding member 33 provides a certain binding force to the electrode assembly 32, facilitate the electrolyte entering into an interior of the electrode assembly 32 through the exposed region 321e, and improve the wettability of the electrolyte to the electrode assembly 32. In addition, the exposed region 321e between the first free end 33a and the second free end 33b can reserve a space for the expansion of the electrode assembly 32, so that it can reduce the risk of damage of the electrode assembly 32 due to the expansion and deformation of itself.

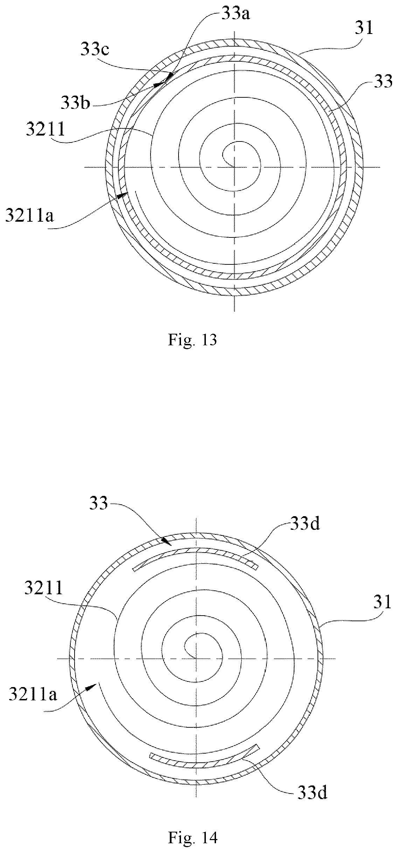

As shown in Fig. 13, in some other embodiments, the first free end 33a coincides with the second free end 33b. The binding member 33 is exactly arranged around one circumference of the electrode assembly 32, and the first free end 33a does not overlap with the second free end 33b. In this way, it is beneficial to improving the flatness of a surface of the binding member 33 and improve the structural stability of the battery cell 30.

As shown in Fig. 14, in some embodiments, the binding member 33 includes a plurality of first parts 33d, the plurality of first parts 33d are spaced apart from one another in the circumferential direction of the electrode assembly 32.

Optionally, the binding member 33 includes two, three, or more first parts 33d. The central angles corresponding to different first parts 33d can be the same or different. The distances among the plurality of first parts 33d may be the same or different, which can be set according to the actual needs.

The binding member 33 is provided with the plurality of first parts 33d, and the plurality of first parts 33d are spaced apart from one another, so that it is beneficial to ensuring the binding force of the binding member 33 on the electrode assembly 32 and reducing the possibility of electrode assembly 32 shaking. In addition, a gap among the plurality of first parts 33d in the circumferential direction of the electrode assembly 32 can be used as a passage for the electrolyte flowing, thereby improving the fluidity of the electrolyte. Furthermore, the gap among the first parts 33d can reserve a space for the expansion of the electrode assembly 32, thereby further reducing the risk of damage of the electrode assembly 32 due to the expansion and deformation of itself.

In some embodiments, the electrode assembly 32 includes a first electrode plate 3211, and the first electrode plate 3211 is wound into a plurality of coils. The binding member 33 is misaligned with a tail end 3211a of an outermost coil of the first electrode plate 3211 in the circumferential direction of the electrode assembly 32.

Optionally, the first electrode plate 3211 may be either the positive electrode plate or the negative electrode plate. The first electrode plate 3211 can be wound into the plurality of coils in a winding direction, and the winding direction is perpendicular to the axial direction X. The tail end 3211a of the first electrode plate 3211 is an edge of the outermost coil of the first electrode plate 3211 in the winding direction.

The binding member 33 is misaligned with the tail end 3211a of the outermost coil of the first electrode plate 3211, so that the tail end 3211a of the first electrode plate 3211 can abut against the binding member 33 in the circumferential direction of the electrode assembly 32.

Optionally, the tail end 3211a of the first electrode plate 3211 can be arranged in the exposed region 321e of the electrode assembly 32, or the tail end 3211a of the first electrode plate 3211 can be arranged in a region between two adjacent first parts 33d to achieve the misalignment between the first parts 33e and the tail end 3211a.

In this way, the binding member 33 will not exert a significant force on the tail end 3211a of the first electrode plate 3211, so that it is beneficial to reducing the risk of the stress concentration of the electrode assembly 32 at the tail end 3211a of the first electrode plate 3211, thereby reducing the risk of the deformation and damage of the electrode assembly 32.

In some embodiments, the battery cell 30 includes a casing 31, an electrode assembly 32 and a binding member 33. The binding member 33 includes a first binding member 331, a second binding member 332, a third binding member 333 and a fourth binding member 334 spaced apart from one another. The electrode assembly 32 includes a main body 321. The main body 321 includes a first end 321a and a second end 321b arranged opposite to each other in an axial direction X of the electrode assembly 32, and a middle section face 321f located between the first end 321a and the second end 321b. The binding member 33 is arranged between a peripheral side face of the main body 321 and the casing 31, and the binding member 33 is configured to expand after contacting with the electrolyte. The first binding member 331 and the second binding member 332 are symmetrically arranged relative to the middle section face 321f. The third middle section face 321f and the fourth middle section face 321f are arranged opposite to each other. The first binding member 331 and the third binding member 333 are located on a side of the middle section face 321f close to the first end 321a, the second binding member 332 and the fourth binding member 334 are located on a side of the middle section face 321f close to the second end 321b, and the first binding member 331 is located on a side of the third binding member 333 close to the first end 321a. A thickness of the first binding member 331 is larger than a thickness of the second binding member 332. The main body 321 includes a first electrode plate 3211, and the first electrode plate 3211 is wound into a plurality of coils. The binding member 33 is misaligned with a tail end 3211a of an outermost coil of the first electrode plate 3211 in a circumferential direction of the electrode assembly 32. A first base plate includes a first active material layer 32111, and the first active material layer 32111 includes a base body region 321c and a thinning region 321d. A thickness of the thinning region 321d is smaller than a thickness of the base body region 321c. The thinning region 321d is located on a side of the base body region 321c close to the first end 321a in the axial direction X, and on a side of the base body region 321c close to the second end 321b. The binding member 33 is misaligned with the thinning region 321d, and the minimum distance between the thinning region 321d and the binding member 33 is 1mm to 2mm.

Embodiments of the present application provide a battery 10 including the battery cell 30 according to any one of the embodiments as described above.

The technical effect of the battery 10 provided by the embodiments of the present application is same as the technical effect of the battery cell 30 due to using the battery cell 30 according to any one of the embodiments as described above, and will not be repeated here.

Embodiments of the present application provide an electricity-consuming apparatus including the battery 10 according to any one of the embodiments as described above, and the battery 10 is used to supply an electric power.

The technical effect of the electricity-consuming apparatus provided by the embodiments of the present application is same as the technical effect of the battery 10 due to using the battery 10 according to the embodiment as described above, and will not be repeated here.

It should be noted that in the absence of conflicts, the embodiments and the features in the embodiments of the present application can be combined with one another.

At last, it should be noted that the above embodiments are only used to illustrate the technical solutions of the present application, but not to limit the technical solutions; although the present application has been described in detail with reference to the embodiments as described above, those skilled in the art should understand that: it is still possible to modify the technical solutions recited in the embodiments as described above, or equivalently replace some of the technical features, but these modifications or replacements do not cause the essence of the corresponding technical solutions to deviate from the gist and scope of the technical solutions of the embodiments of the present application.

## Claims

1. A battery cell, comprising
a casing;
an electrode assembly, arranged in the casing, the electrode assembly comprising a main body, and the main body comprising a first end and a second end arranged opposite to each other in an axial direction of the electrode assembly;
at least one binding member, arranged between a peripheral side face of the main body and the casing,
wherein the at least one binding member comprises a first binding member, and a minimum distance between the first binding member and the first end is smaller than a minimum distance between the first binding member and the second end.

2. The battery cell according to claim 1, wherein the peripheral side face of the electrode assembly comprises a first attachment region, the first binding member is attached to at least a portion of the first attachment region, the first attachment region starts from the first end and extends in the axial direction, and a size of the first attachment region in the axial direction is smaller than 1/3 of a size of the main body in the axial direction.

3. The battery cell according to claim 1 or 2, wherein the electrode assembly comprises a first electrode plate, the first electrode plate comprises a first active material layer located in the main body, the first active material layer comprises a base body region and a thinning region, a thickness of the thinning region is smaller than a thickness of the base body region, and the thinning region is located on a side of the base body region close to the first end in the axial direction;
the first binding member is misaligned with the thinning region in the axial direction.

4. The battery cell according to claim 3, wherein a distance between the first binding member and the thinning region in the axial direction is in a range of 1mm-2mm.

5. The battery cell according to any one of claims 1 to 4, wherein the at least one binding member comprises a second binding member, and a minimum distance between the second binding member and the second end is smaller than a minimum distance between the second binding member and the first end.

6. The battery cell according to claim 5, wherein the peripheral side face of the electrode assembly comprises a second attachment region, the second binding member is attached to at least a portion of the second attachment region, the second attachment region starts from the second end and extends in the axial direction, and a size of the second attachment region in the axial direction is smaller than 1/3 of a size of the main body in the axial direction.

7. The battery cell according to claim 5 or 6, wherein the main body comprises a middle section face located between the first end and the second end, and the second binding member and the first binding member are symmetrically arranged relative to the middle section face in the axial direction.

8. The battery cell according to any one of claims 1 to 7, wherein the at least one binding member comprises a third binding member, the main body comprises a middle section face located between the first end and the second end, and the third binding member covers the middle section face.

9. The battery cell according to any one of claims 1 to 7, wherein the at least one binding member comprises a third binding member, the main body comprises a middle section face located between the first end and the second end, the third binding member is attached to a region between the middle section face and the first end, and the third binding member is located on a side of the first binding member close to the second end.

10. The battery cell according to claim 8 or 9, wherein a thickness of the first binding member is larger than a thickness of the third binding member.

11. The battery cell according to any one of claims 5 to 7, wherein the main body comprises a middle section face located between the first end and the second end;
the at least one binding member comprises a fourth binding member attached to a region between the middle section face and the second end and located on a side of the second binding member close to the first end.

12. The battery cell according to claim 11, wherein the at least one binding member comprises a third binding member, and the fourth binding member and the third binding member are symmetrically arranged relative to the middle section face.

13. The battery cell according to any one of claims 1 to 12, wherein the binding member is configured to expand after absorbing electrolyte.

14. The battery cell according to claim 13, wherein a material of the binding member comprises at least one of thermoplastic polyurethane, dextran gel and hydroxyl terminated polybutadiene polyurethane.

15. The battery cell according to any one of claims 1 to 14, wherein the binding member comprises a first free end and a second free end in a circumferential direction of the electrode assembly;
the binding member comprises an overlapping part arranged between the first free end and the second free end, and in the circumferential direction of the electrode assembly, a central angle α of the overlapping part satisfies: α≤30°.

16. The battery cell according to any one of claims 1 to 14, wherein the binding member comprises a first free end and a second free end in a circumferential direction of the electrode assembly, and the first free end and the second free end are spaced apart from each other;
the main body comprises an exposed region located between the first free end and the second free end and exposed to an exterior of the binding member; and in the circumferential direction of the electrode assembly, a central angle β of the exposed region satisfies: β≤ 180 °.

17. The battery cell according to any one of claims 1 to 14, wherein the binding member comprises a plurality of first parts spaced apart from one another in a circumferential direction of the electrode assembly.

18. The battery cell according to claim 16 or 17, wherein the electrode assembly comprises a first electrode plate wound into a plurality of coils;
the binding member is misaligned with a tail end of an outermost coil of the first electrode plate in the circumferential direction of the electrode assembly.

19. A battery, comprising the battery cell according to any one of claims 1 to 18.

20. An electricity-consuming apparatus, comprising the battery according to claim 19, and the battery configured to supply electric power.
